# EUROPÄISCHE PATENTSCHRIFT

(11) **EP 0 648 383 B1**
(45) Veröffentlichungstag und Bekanntmachung des Hinweises auf die Patenterteilung: **03.01.1996**
(21) Anmeldenummer: 93912901.1
(22) Anmeldetag: 05.06.1993
(51) Int. Cl.: H02K 17/16

(54) **KURZSCHLUSSLÄUFER EINER ELEKTRISCHEN MASCHINE**
SQUIRREL CAGE ROTOR FOR AN ELECTRICAL MOTOR
ROTOR EN COURT-CIRCUIT D'UN MOTEUR ELECTRIQUE

(30) Priorität: 02.07.1992 DE 4221953
(43) Veröffentlichungstag der Anmeldung: 19.04.1995
(73) Patentinhaber: AEG Schienenfahrzeuge GmbH, D-16761 Hennigsdorf (DE); SIEMENS AKTIENGESELLSCHAFT, D-80333 München (DE)
(72) Erfinder: SAUER, Bernd, D-1000 Berlin 26 (DE); BÖHM, Heinz, D-1000 Berlin 37 (DE); SCHARSTEIN, Egbert, D-8500 Nürnberg (DE)
(74) Vertreter: Rüthning, Wolfgang, Dipl.-Ing.
(86) Internationale Anmeldenummer: EP9301429
(87) Internationale Veröffentlichungsnummer: WO9401918

(56) Entgegenhaltungen:
- DE-A- 271 011
- DE-A- 555 837
- GB-A- 150 579
- US-A- 1 096 243

## Beschreibung

Die Erfindung bezieht sich auf einen Kurzschlußläufer einer elektrischen Maschine mit einem das Blechpaket axial durchsetzenden Käfig aus elektrisch gut leitenden Kurzschlutßstäben, die an ihren das Blechpaket überragenden Enden zu Stabverbänden zusammengeführt und dort mit einem Kurzschlußring stoffschlüssig verbunden sind.

Bei größeren Drehstrommotoren, die an Frequenzumrichtern mit wechselnden Drehzahlen betrieben werden, z.B. bei elektrischen Triebfahrzeugen und Lokomotiven, aber auch bei anderen Anwendungen, kann die allgemein übliche Konstruktion des Läufers zu Problemen führen. Bei der üblichen Ausbildung als Käfigläufer ist auf der Läuferwelle Elektroblech zur Unterbindung von Wirbelströmen geschichtet, wobei im Außendurchmesser des Blechs eingearbeitete Nuten die Kupferstäbe aufnehmen. Am Ende des Blechpaketes überragen die Kurzschlußstäbe das Blech und sind dort durch Schweiß- oder Lötverbindung mit endseitigen Kurzschlußringen verbunden. Die in den Blechnuten liegenden Kurzschlußstäbe und die am Ende befestigten Kurzschlußringe bilden den Käfig. Aus elektrischen Gründen haben die Kurzschlußstäbe im allgemeinen in radialer Richtung eine größere Ausdehnung als in der Breite. Die über das Blechpaket überstehenden Stäbe haben dadurch in tangentialer Richtung des Läufers eine geringere Biegesteifigkeit als in radialer Richtung.
Der mit den Stäben stoffschlüssig verbundene Kurzschlußring ist gegenüber dem Blechpaket aufgrund der Weichheit der Kurzschlußstäbe in tangentialer Richtung schwingungsfähig. Wird nur der Läufer allein betrachtet, so kann dieser als ein aus drei Massen bestehendes Drehschwingungssystem
angesehen werden. Das Blechpaket bildet dabei die zentrale große Masse, an die beidseitig über Drehsteifigkeiten, die aus den Kurzschlußstäben gebildet werden, die Kurzschlußringe als weitere Drehmassen angeschlossen sind.

Die sich aus diesem Schwingungssystem ergebenden Torsionseigenfrequenzen liegen bei größeren Drehstrommotoren unter 1000 Hz. Werden derartige Maschinen an Frequenzumrichtern betrieben, so können die auftretenden Oberwellen im Strom zu nennenswerten Pendelmomenten führen. Diese Pendelmomente wirken als äußeres Drehmoment auf den Läufer und können diesen wiederum als schwingungsfähiges System zu Drehschwingungen anregen. Dabei schwingen die Kurzschlußringe torsional gegen das Blechpaket. Unter ungünstigen Bedingungen ergeben sich Resonanzen, die an den auf Biegung belasteten Stäben unzulässig hohe mechanische Spannungen und ggf. Motorschäden hervorrufen.

Diese grundsätzlichen Zusammenhänge sind z. B. der Literaturstelle "ETZ-Archiv" Bd. 6 (1984) Heft 5, Seiten 165 bis 172 entnehmbar.

Um höhere Torsionseigenfrequenzen des Läufers zu realisieren und Resonanzeffekte zu unterbinden, indem die Läufer-Eigenfrequenzen über den Anregungsfrequenzen aus dem Frequenzumrichter liegen, kann natürlich die Verbindung zwischen dem Blechpaket und den Kurzschlußringen drehsteifer ausgeführt werden. Dazu kann beispielsweise der Überstand der Stäbe über dem Blechpaket verkürzt werden, so daß die Biegelänge der Stäbe kürzer ist. Die Möglichkeit, dies auszunützen, ist allerdings begrenzt, da ein gewisser Stabüberstand aus Gründen der mechanischen Beanspruchung der Stäbe bei hoher Läuferdrehzahl im Fliehkraftfeld notwendig ist. Aufgabe der Erfindung ist es, die Konstruktion von Käfigläufern gegen solche Sekundäreinwirkungen von Frequenzumrichtern auf eine einfache Weise unempfindlicher zu machen.

Diese Aufgabe wird dadurch gelöst, daß jeweils die Enden von wenigstens zwei nebeneinanderliegenden Kurzschlußstäben derart zusammengeführt sind, daß die Enden mit dem Kurzschlußring jeweils eine fachwerkförmige Verbindungsstelle bilden. Vorteilhafte Ausbildungen für die Ausgestaltung von 2er-, 3er- und 4er-Stabverbänden sind den Unteransprüchen entnehmbar.

Es ist zwar schon für einen anderen Zweck bekannt , nebeneinanderliegende Kurzschlußstäbe jeweils zu zweit axialparallel zu Stabverbänden zusammenzuführen, dies führt jedoch an der stoffschiüssigen Verbindungsstelle noch zu keiner die Torsionssteifigkeit verstärkenden fachwerkartigen Verbindung (DE-A-555837).

Es ist weiter bekannt, sämtliche Leiterenden tangential abzukröpfen oder abzuwihkeln und dort in einer gemeinsamen tangentialparallelen Leiterführung als Kurzschlußringersatz im Block zu verlöten, wobei Schrumpfringe die Fliehkraftfestigkeit verbessern. Auch dort kommt es an den stoffschlüssigen Verbindungsstellen zu keiner versteifenden Fachwerkausbildung (US-A-1096243).

Anhand von schematischen Ausführungsbeispielen wird die Erfindung im nachstehenden näher erläutert.

Es zeigen:
Fig.1 Teilansicht eines Kurzschlutßläufers mit 3er Stabverbänden
Fig.2 Schema in sich geschlossener Kurzmit 3er Stabverbänden schlußstäbe mit 3er Stabverbänden mit 3er Stabverbänden
Fig.3 Schema für fortlaufend endseitige Zusammenschlüsse mit 3er Stabverbänden
Fig.4 Schema für fortlaufenden Zusammenschluß mit 2er-Stabverbänden
Fig.5 Schema in sich geschlossener Kurzschlußstäbe für 2er-Stabverbände
Fig.6 Schema für fortlaufenden Zusammenschluß mit 4er-Stabverbänden
Fig.7 Schema für in sich geschlossenen Zusammenschluß der Kurzschlußstäbe bei 4er-Stabverbänden

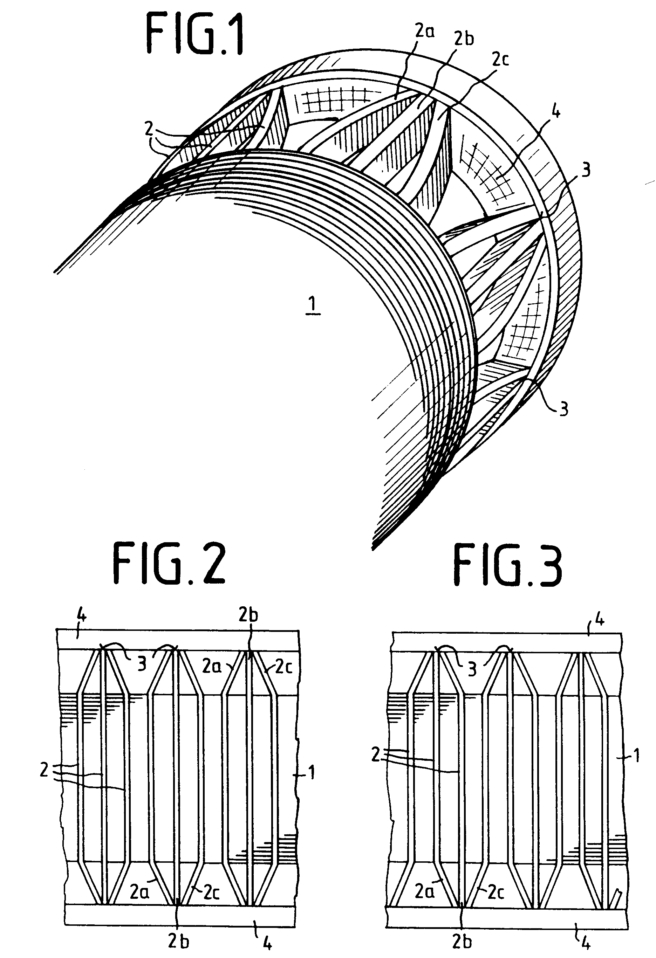

In Fig. 1 ist mit 1 ein aus Blechen geschichteter Kurzschlußläufer angedeutet, aus den in nicht näher dargestellten Nuten eingebettete Kurzschlußstäbe 2 herausragen. Jeweils drei Kurzschlußstäbe 2 sind für einen 3er-Stabverband zusammengefaßt, wobei die äußeren Kurzschlußstäbe 2a und 2c zueinander tangential abgewinkelt abgebogen zu einem mittleren, gerade geführten Kurzschlußstab 2b führen. An den Stellen 3 sind die derartig zusammengeführten Kurzschlußstäbe im Stabverband mit dem Kurzschlußring 4 verbunden.

Fig. 1 zeigt nur die Stabverbände des einen Läuferendes. Das andere Läuferende ist gleichartig ausgebildet, kann jedoch gemäß der Fig. 2 und 3 dabei verschiedene Kurzschlußstäbe einbeziehen. Bei Fig. 2 sind dieselben drei Kurzschlußstäbe an beiden Enden des Läufers miteinander verbunden, es ergibt sich ein in sich geschlossener Verlauf. Nach Fig. 3 sind fortschreitend weitere Kurzschlußstäbe mit einbezogen, wodurch sich ein fortschreitender mäanderartiger Verlauf ergibt. Dadurch, daß die überstehenden Kurzschlußstäbe in Umfangsrichtung abgebogen werden, werden so Stabgruppen oder -verbände gebildet, die eine stabilisierende Funktion ähnlich einem Fachwerk haben. Dabei wird der überstehende Stab nicht nur auf Biegung bei Torsion des Kurzschlußringes belastet, wie beim geraden Stab, sondern außerdem mit Normalkräften, was die Steifigkeit in Umfangsrichtung wesentlich steigert.

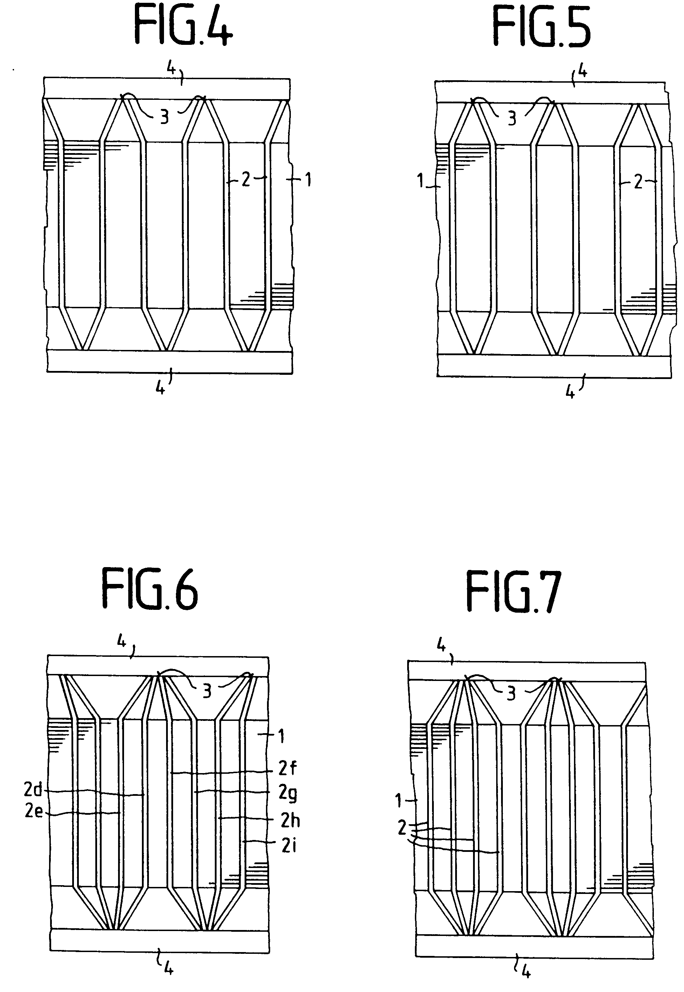

Die Fig. 4 und 5 zeigen Anordnungen für die Bildung von 2er-Stabverbänden bei gerader Nutzahl des Läufers 1. Nach Fig. 4 wird durch wechselseitiges Abbiegen der Kurzschlußstäbe in verschiedenen Richtungen eine Symmetrie des Käfigs bei mäanderförmig fortschreitendem Verlauf erreicht. In Fig. 5 sind jeweils zwei Kurzschlußstäbe in sich geschlossen verbunden.

Die Fig. 6 und 7 zeigen Anordnungen für die Bildung von 4er-Stabverbänden, bei denen jeweils vier Kurzschlußstäbe 2 in einer durch vier teilbaren Nutzahl des Läufers untergebracht sind. Die vier Kurzschlußstäbe 2 sind an ihren Enden abgewinkelt und laufen dort zusammen. Nach Fig.7 sind die Kurzschlußstäbe an ihren beiden Enden in sich geschlossen und bilden die Stabverbände. Nach Fig. 6 bilden jeweils zwei Kurzschlußstäbe 2f, 2g, die an einem, hier oberen Ende mit zwei davor angrenzenden Kurzschlußstäben 2d, 2e zusammengefaßt sind, am anderen - hier unteren - Ende mit zwei dahinter angrenzenden Kurzschlußstäben 2h, 2i einen Stabverband. Dies setzt sich sinngemäß abwechselnd fort. Diese Ausführung ist besonders schwingungsarm. Durch die Erfindung kann durch einfache konstruktive Ausbildung eine Verbesserung des Betriebes von Drehstromkurzschlußläufermaschinen an Frequenzumrichtern erreicht werden.

## Patentansprüche

1. Kurzschlußläufer (1) einer elektrischen Maschine mit einem das Blechpaket axial durchsetzenden Käfig aus elektrisch gut leitenden Kurzschlußstäben (2), die an ihren, das Blechpaket überragenden Enden zu Stabverbänden zusammengeführt und dort (3) mit einem Kurzschlußring (4) stoffschlüssig verbunden sind, **dadurch gekennzeichnet**, daß jeweils die Enden von wenigstens zwei nebeneinanderliegenden Kurzschlußstäben (2) derart zusammengeführt sind, daß die Enden mit dem Kurzschlußring (4) jeweils eine fachwerkförmige Verbindungsstelle (3) bilden.

2. Kurzschlußläufer nach Anspruch 1, **dadurch gekennzeichnet**,daß wenigstens zwei der Kurzschlußstäbe (2) zur Bildung der endseitigen Stabverbände zueinander tangential winklig abgebogen sind.

3. Kurzschlußläufer nach Anspruch 1 oder 2, **dadurch gekennzeichnet**, daß zur Bildung von 3er-Stabverbänden jeweils zwei äußere, an den Enden zueinander abgebogene Kurzschlußstäbe (2a, 2c) an jeweils einen mittleren, gerade geführten Kurzschlußstab (2b) herangeführt sind (Fig. 1).

4. Kurzschlußläufer nach Anspruch 3, **dadurch gekennzeichnet**, daß bei Bildung der 3er-Stabverbände jeweils dieselben drei Kurzschlußstäbe (2) in sich geschlossen an ihren beiden Enden zusammengeführt sind (Fig. 2).

5. Kurzschlußläufer nach Anspruch 3, **dadurch gekennzeichnet**,daß bei Bildung der 3er-Stabverbände jeweils ein an einem Ende geradegeführter Kurzschlußstab (2b) am anderen Ende abgebogen ist und dort den äußeren winklig abgebogenen Kurzschlußstab (2a) eines fortlaufend weiteren Stabverbandes bildet usw. (Fig. 3).

6. Kurzschlußläufer nach Anspruch 1 oder 2, **dadurch gekennzeichnet**, daß zur Bildung von 2er-Stabverbänden bei gerader Nutzahl des Läufers jeweils zwei aneinander angrenzende Kurzschlußstäbe (2) an ihren beiden Enden zusammengeführt sind (Fig. 5).

7. Kurzschlußläufer nach Anspruch 1 oder 2, **dadurch gekennzeichnet**, daß zur Bildung von 2er-Stabverbänden jeder Kurzschlußstab (2) an seinen beiden Enden in verschiedenen Richtungen tangentialwinklig abgebogen ist und daß die verschiedenen angrenzenden Kurzschlußstäbe an ihren Enden zu mäanderartig fortlaufenden Stabverbänden zusammengeführt sind (Fig. 4).

8. Kurzschlußläufer nach Anspruch 1 oder 2, **dadurch gekennzeichnet**, daß zur Bildung eines symmetrischen 4er-Stabverbandes bei einer durch 4 teilbaren Nutzahl des Kurzschlußläufers jeweils 4 Kurzschlußstäbe (2) an ihren beiden Enden zusammengeführt sind.

9. Kurzschlußläufer nach Anspruch 8, **dadurch gekennzeichnet**, daß jeweils dieselben vier Kurzschlußstäbe an beiden Enden einen gemeinsamen Stabverband bilden (Fig. 7).

10. Kurzschlußläufer nach Anspruch 8, **dadurch gekennzeichnet**, daß jeweils zwei aneinander angrenzende Kurzschlußstäbe (z.B. 2g, 2h), die an einem Ende mit zwei davor angrenzenden Kurzschlußstäben (z.B. 2d, 2e) zusammengefaßt sind, am anderen Ende mit zwei dahinter angrenzenden Kurzschlußstäben (z.B. 2h, 2i) einen Stabverband bilden uns. (Fig. 6).

## Claims

1. Squirrel cage rotor (1) of an electrical machine with a cage, which passes axially through the lamination packet and is of electrically highly conductive squirrel cage rods (2), which at their ends projecting beyond the lamination packet are led together to rod connections and connected there (3) in substance bond with a short-circuit ring (4), characterised thereby, that the ends of at least two squirrel cage rods (2), which lie one beside the other, are each time led together in such a manner that the ends each time form a latticeworklike junction (3) with the short-circuit ring (4).

2. Squirrel cage rotor according to claim 1, chracterised thereby, that at least two of two of the squirrel cage rods (2) are angularly bent over one tangentially to the other for the formation of the rod connections at the ends.

3. Squirrel cage rotor according to claim 1 or 2, characterised thereby, that for the formation of 3-rod connections, two outer squirrel cage rods (2a, 2c), each bent over towards the other at the ends, are each time led towards a straight squirrel cage middle rod (2b) (Figure 1).

4. Squirrel cage rotor according to claim 3, characterised thereby, that in the case of the formation of the 3-rod connections, the same three squirrel cage rods (2) are each time led together closed in themselves at both their ends (Figure 2).

5. Squirrel cage rotor according to claim 3, characterised thereby, that in the case of the formation of the 3-rod connections, one squirrel cage rod (26), which is straight at one end, is each time bent over at the other and there forms the outer angularly bent-over squirrel cage rod (2a) of a progressively further rod connection and so forth (Figure 3).

6. Squirrel cage rotor according to claim 1 or 2, characterised thereby, that for the formation of 2-rod connections with even number of grooves of the rotor, two mutually adjoining squirrel cage rods (2) are each time led together at both their ends (Figure 5).

7. Squirrel cage rotor according to claim 1 or 2, characterised thereby, that for the formation of 2-rod connections, each squirrel cage rod (2) is angularly bent over tangentially in different directions at both its ends and that the different adjoining squirrel cage rods are led together at their ends into rod connections continuing in meander fashion (Figure 4).

8. Squirrel cage rotor according to claim 1 or 2, characterised thereby, that for the formation of a symmetrical 4-rod connection with a number, which is divisible by 4, of grooves of the squirrel cage rotor, 4 squirrel cage rods (2) are each time led together at both their ends.

9. Squirrel cage rotor according to claim 8, characterised thereby, that the same four squirrel cage ends each time form a common rod connection at both ends (Figure 7).

10. Squirrel cage rotor according to claim 8, characterised thereby, that two mutually adjoining squirrel cage rods (for example 2g, 2h), which are combined at one end with two squirrel cage rods (for example 2d, 2e) adjoining in front thereof, each time form a rod connection at the other end with two squirrel cage rods (for example 2h, 2i), which adjoin therebehind (Figure 6).

## Revendications

1. Rotor en court-circuit (1) d'une machine électrique, comprenant un cage, traversant axialement le paquet de tôles, constituée de barres de court-circuit (2) conduisant bien électriquement, qui, à leurs extrémités faisant saillie hors du paquet de tôles, sont réunies en des assemblages de barres, et, là (3), sont reliées par jonction de matière avec une bague de court-circuit (4), caractérisé en ce que, chaque fois, les extrémités d'au moins deux barres de court-circuit (2), se trouvant l'une à côté de l'autre, sont réunies de telle sorte, que les extrémités forment, avec la bague de court-circuit (4), chaque fois, un emplacement de liaison (3) en forme de treillis.

2. Rotor en court-circuit selon la revendication 1, caractérisé en ce qu'au moins deux des barres de court-circuit (2) sont déviées par courbage angulairement, tangentiellement l'une par rapport à l'autre, pour la formation des assemblages de barres aux côtés d'extrémité.

3. Rotor en court-circuit selon la revendication 1 ou la revendication 2, caractérisé en ce que pour la formation d'assemblages de barres à 3 barres, chaque fois, deux barres de court-circuit (2a, 2c) extérieures, déviées par courbage l'une vers l'autre, aux extrémités, chaque fois, sont conduites à une barre de court-circuit (2b), exécutée rectiligne, médiane (fig. 1).

4. Rotor en court-circuit selon la revendication 3, caractérisé en ce que, lors de formation des assemblages de barres à 3 barres, chaque fois, trois barres de court-circuit (2) de ceux-ci sont réunies, fermées sur elles-mêmes, à leurs deux extrémités (fig. 2).

5. Rotor en court-circuit selon la revendication 3, caractérisé en ce que, lors de formation des assemblages de barres à 3 barres, chaque fois, une barre de court-circuit (2b), exécutée rectiligne à une extrémité, est déviée par courbage à l'autre extrémité, et, là, forme à la barre de court-circuit (2a) , déviée par courbage angulairement, extérieur, un autre assemblage de barres continuant, etc. (fig. 3).

6. Rotor en court-circuit selon la revendication 1 ou la revendication 2, caractérisé en ce que, pour la formation d'assemblages de barres à 2 barres, lors d'un nombre d'encoches paires du rotor, chaque fois, deux barres de court-circuit (2) limitrophes l'une de l'autre sont réunies à leurs deux extrémités (fig. 5).

7. Rotor en court-circuit selon la revendication 1 ou la revendication 2, caractérisé en ce que, pour la formation d'assemblages de barres à 2 barres, chaque barre de court-circuit (2), à ses deux extrémités, est déviée par courbage, angulairement, tangentiellement, dans des directions différentes, et en ce que les différentes barres de court-circuit limitrophes, à leurs extrémités, sont réunies en des assemblages de barres se continuant à la façon de méandres (fig. 4).

8. Rotor en court-circuit selon la revendication 1 ou la revendication 2, caractérisé en ce que, pour la formation d'un assemblage de barres à 4 barres symétrique, lors d'un nombre d'encoches du rotor en court-circuit susceptible d'être divisé par 4, chaque fois, 4 barres de court-circuit (2) sont réunies à leurs deux extrémités.

9. Rotor en court-circuit selon la revendication 8, caractérisé en ce que, chaque fois, ces mêmes 4 barres de court-circuit forment, aux deux extrémités, un assemblage de barres commun (fig. 7).

10. Rotor en court-circuit selon la revendication 8, caractérisé en ce que, chaque fois, deux barres de court-circuit (par exemple 2g, 2h) limitrophes l'une de l'autre, qui, à une extrémité, sont réunies avec deux barres de court-circuit (par exemple 2d, 2e) limitrophes de celles-ci, à l'autre extrémité, forment un assemblage de barres avec deux barres de court-circuit (par exemple 2h, 2i) limitrophes, à l'arrière, etc. (fig. 6).
